# EUROPÄISCHE PATENTANMELDUNG

(11) **EP 0 858 964 A1**
(43) Veröffentlichungstag der Anmeldung: **19.08.1998**
(21) Anmeldenummer: 98101223.0
(22) Anmeldetag: 24.01.1998
(51) Int. Cl.: B65G 53/32, E04G 21/04

(54) **Betonpumpvorrichtung**

(30) Priorität: 12.02.1997 DE 29702372 U
(71) Anmelder: TBH Transportbetonwerke Heilbronn GmbH & Co. KG, 74080 Heilbronn (DE)
(72) Erfinder: Barth, Dieter, 71726 Benningen (DE)
(74) Vertreter: Clemens, Gerhard, Dr.-Ing.

(57) **Zusammenfassung**

Betonpumpvorrichtung (10) mit einer Pumpeinrichtung (12) und einer mobilen Druckrohreinrichtung (14), insbesondere aus hintereinander angeordneten Druckrohreinheiten (16), durch die der Beton mittels der Pumpeinrichtung (12) gedrückt wird, zeichnet sich dadurch aus, daß im Bereich der Druckrohrauslegereinrichtung (14) eine Absperreinrichtung (20) angeordnet ist, die in Abhängigkeit der Signale einer Steuereinrichtung (24) den Durchfluß von Pumpbeton sperrt oder öffnet.

## Beschreibung

### TECHNISCHES GEBIET

Die vorliegende Erfindung betrifft eine Betonpumpvorrichtung mit einer Pumpeinrichtung und einer mobilen Druckrohrauslegeeinrichtung, insbesondere aus hintereinander angeordneten Druckrohreinheiten, durch die der Beton mittels der Pumpeinrichtung gedrückt wird.

Derartige Betonpumpvorrichtungen dienen zur Förderung des zubereiteten Betons vom Mischer zur Verarbeitungsstelle. Sie sind in der Regel als Hochdruckpumpe, d. h. Kolbenpumpe mit mechanischem bzw. hydraulischem Antrieb oder Kreiselpumpe, ausgebildet. Die Förderung des Betons von der Betonpumpvorrichtung zur verarbeitungsstelle erfolgt durch Druckrohre, die häufig zur leichteren Montage meist mit Schnellkupplungen versehen sind und insgesamt die Druckrohrauslegeeinrichtung bilden.

Zur besseren Beweglichkeit sind derartige Betonpumpvorrichtungen häufig auf Lastkraftwagen montiert.

### STAND DER TECHNIK

Es ist bekannt, zum Betonieren einen sogenannten Krankübel einzusetzen. Dieser Krankübel wird mittels eines Kranes bewegt. Die Befüllung erfolgt in der Regel über ein Transportbetonfahrzeug. Nach Befüllung wird der Krankübel an die zu betonierende Stelle gebracht und dort entleert. Dieses Betonierverfahren ist sehr aufwendig und daher hinsichtlich eines rationellen Betoniervorgangs bei größerem Betoniervolumen unwirtschaftlich.

Es ist weiterhin bekannt, Betonpumpen mit Ausleger einzusetzen bei der das Ende des Auslegers an die zu betonierende Stelle gefahren wird. Nach dem Einschalten der Pumpe tritt Beton am Auslegerende aus. Ist das jeweilige Betoniervolumen erreicht, wird an der Betonpumpvorrichtung die Pumpeinrichtung unterbrochen. Zum Unterbrechungszeitpunkt ist jedoch noch genügend Druck im Auslegersystem vorhanden, so daß Beton nachgeschoben wird. Dies führt in vielen Fällen zu einer Überfüllung, insbesondere bei relativ kleinen Betoniervolumina. Die Überfüllung führt dazu, daß Beton überläuft, was zu Verschmutzung von Schalungselementen oder dergleichen Schalhilfen führt. Wird diese Verschmutzung nicht innerhalb einer relativen kurzen Zeit gereinigt, härtet der Beton aus, so daß eine spätere Reinigung nur unter hohem Aufwand durchführbar ist. Die Überfüllung ist auch ein großes Problem bei der Erstellung von Bauwerken mittels Füllsteinen. Mittels Füllsteinen können rationelle Wandeinheiten erstellt werden. Diese Füllsteine besitzen die Außenform eines Mauerwerksteins, sind jedoch im Inneren hohl. Sie werden in Form einer Mauer aufeinandergesetzt. Zum Erreichen einer ausreichenden Stabilität werden sie dann mit Beton befüllt. Hier führt eine Überfüllung dazu, daß die Außenhaut der "gemauerten" Wand verschmutzt wird, so daß unverzüglich eine Reinigung eingeleitet werden muß, damit sich die Betonverschmutzung nicht auf der Außenhaut festsetzt.

### DARSTELLUNG DER ERFINDUNG

Der vorliegenden Erfindung liegt die Aufgabe bzw. das Problem zugrunde, eine gegenüber dem genannten Stand der Technik verbesserte Betonpumpvorrichtung anzugeben, bei der die Überfüllung des zu betonierenden Füllvolumens, insbesondere bei kleineren Betoniervolumen wie bei Füllsteinen, weitgehend vermieden werden kann.

Die erfindungsgemäße Betonpumpvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Betonpumpvorrichtung der eingangs genannten Art zeichnet sich demgemäß dadurch aus, daß im Bereich der Druckrohrauslegereinrichtung eine Absperreinrichtung angeordnet ist, die in Abhängigkeit der Signale einer Steuereinrichtung den Durchfluß von Pumpbeton sperrt oder öffnet, wobei gemäß einer besonders bevorzugten Ausgestaltung die Druckrohrauslegereinrichtung im Austrittsbereich des Pumpbetons eine flexible Rohreinheit besitzt und die Sperreinrichtung in Pumprichtung P gesehen unmittelbar vor der flexiblen Rohreinheit angeordnet ist.

Durch das Anordnen der Sperreinheit im vorderen Bereich der Druckrohrauslegereinrichtung wird verhindert, daß nachdem der gewünschte Füllstand des zu betonierenden Bauteils erreicht ist und der Pumpvorgang unterbrochen ist, weiter Beton nachgeschoben wird, so daß eine Überfüllung zuverlässig verhindert werden kann.

Eine besonders vorteilhafte Ausgestaltung der erfindungsgemäßen Betonpumpvorrichtung zeichnet sich dadurch aus, daß in Pumprichtung P gesehen unmittelbar vor und/oder hinter der Absperreinrichtung eine rohrbogenförmige Betonbremseinheit angeordnet ist.

In vielen Fällen ist die Betonpumpvorrichtung auf einem Fahrzeug montiert. Dieses Fahrzeug besitzt in der Regel eine Kompressoreinheit. Diese Kompressoreinheit wird erfindungsgemäß in einer bevorzugten Ausgestaltung miteingesetzt, in dem die Sperreinrichtung über eine von diesem Kompressor beaufschlagte pneumatische Leitung pneumatisch betätigbar ausgebildet ist. Dabei kann die Sperreinrichtung als ein Ventil mit zusammenquetschbarem flexiblem Schlauch ausgebildet sein.

Eine konstruktiv besonders einfache und zuverlässige Ausführungsvariante zeichnet sich dadurch aus, daß eine elektromagnetische Ventileinheit vorhanden ist, die von der Steuereinrichtung ansteuerbar ist und die die pneumatische Betätigung der Sperreinrichtung veranlaßt.

Eine besonders vorteilhafte Ausgestaltung an der erfindungsgemäßen Betonpumpvorrichtung zeichnet sich dadurch aus, daß die Steuereinrichtung gleichzeitig auch die Pumpeinrichtung ansteuert, so daß diese ebenfalls zeitverzögert bei Betätigung der Sperreinrichtung deaktiviert wird.

Um von den jeweils gegebenen manchmal unübersichtlichen Betoniersituationen unabhängig zu sein, kann die Steuereinrichtung auch als Fernsteuereinrichtung ausgebildet sein.

Eine besonders wirtschaftliche und konstruktiv zuverlässige Ausführungform der erfindungsgemäßen Betonpumpvorrichtung zeichnet sich dadurch aus, daß die Sperreinrichtung über Flansche an die Druckrohrauslegereinrichtung angeschlossen ist.

Eine besonders bevorzugte Ausgestaltung zeichnet sich dadurch aus, daß im Endbereich der Druckrohrauslegereinrichtung bzw. der flexiblen Rohreinheit ein Betätigungsorgan der Steuereinrichtung vorhanden ist, auf dessen Bedienung hin, die Sperreinrichtung schließt bzw. öffnet. Dadurch kann die Betonierperson vorort an der Betonierstelle abhängig von dem gewünschten Füllstand die Sperreinrichtung betätigen, so daß in zuverlässiger Art und Weise die gewünschte Füllhöhe erreicht werden kann, ohne daß es zu einer Überfüllung kommt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigt:

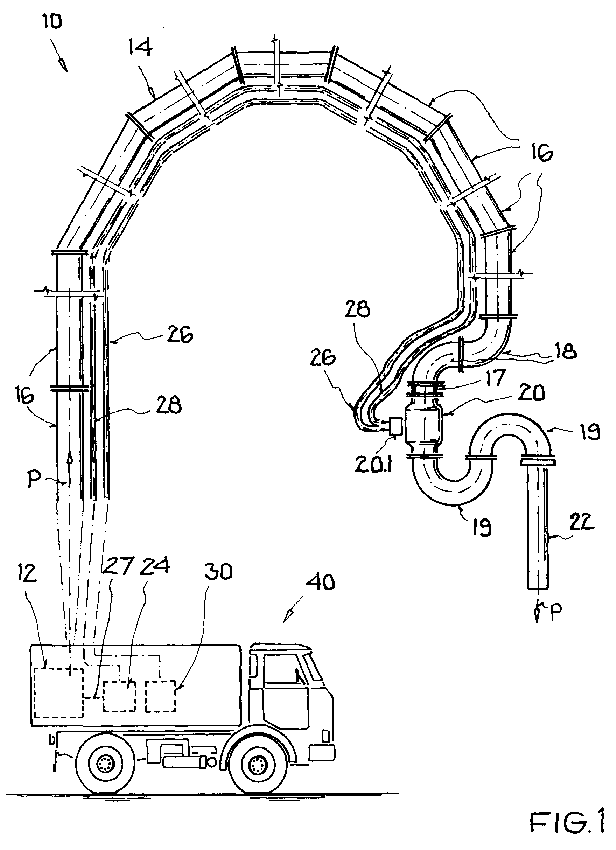

- Fig. 1: schematische Darstellung einer Betonpumpvorrichtung mit Druckrohrauslegereinrichtung und innerhalb der Druckrohrauslegereinrichtung angeordneter Sperreinrichtung.

### WEGE ZUM AUSFÜHREN DER ERFINDUNG

Eine in Fig. 1 stark schematisiert dargestellte Betonpumpvorrichtung 10 ist auf einem Fahrzeug 40 montiert und in Fig. 1 in schematisiert dargestelltem ausgefahrenen Zustand ihrer Druckrohrauslegereinrichtung 14 gezeichnet. Die Druckrohrauslegereinrichtung 14 besteht aus hintereinander angeordneten Druckrohren 16, die in nicht näher dargestellter Art und Weise miteinander verbunden sind, wobei die Druckrohrauslegereinrichtung zu Transportzwecken am Fahrzeug 40 eingefahren und zusammengefaltet werden kann. Die Darstellung der Druckrohrauslegereinrichtung 14 in Fig. 1 ist gegenüber der Darstellung des Fahrzeugs 40 vergrößert angegeben.

Am Fahrzeug 40 selbst ist eine schematisch dargestellte Pumpeinrichtung 12 vorhanden, die bereitgestellten Beton durch die Druckrohrauslegereinrichtung 14 in Pumprichtung P drückt.

Im freien Endbereich der Druckrohrauslegereinrichtung 14 ist an das letzte Druckrohr 16 ein in Fig. 1 nach links abgewinkelter 90°-Bogen 18 und daran anschließend ein weiterer nach unten abgewinkelter 90°-Bogen 18 angeflanscht. An letzterem ist ein rohrförmiges Reduzierstück 17 angeflanscht, an das wiederum eine pneumatisch arbeitende Sperreinrichtung 20 anschließt. Nach der Sperreinrichtung 20 folgt ein 180°-Bogen 19 und ein weiterer 180°-Bogen 19, an dem schließlich ein flexibles Rohr 22 angeflanscht ist. Das flexible Rohr 22 ist aus Sicherheitsgründen vorzusehen.

Im wesentlichen parallel zum Verlauf der Druckrohrauslegereinrichtung ist in Fig. 1 eine schematisch eine Steuerleitung 24 und eine pneumatische Leitung 26 dargestellt. Die Steuerleitung 24 verläuft von einer am Fahrzeug 40 schematisch dargestellten Steuereinrichtung 24 bis hin zur Sperreinrichtung 20. Ebenso verläuft die pneumatische Leitung 26 von einem am Fahrzeug 40 schematisch dargestellten Druckluftkompressor 30 bis hin zur Sperreinrichtung 20.

Die Sperreinrichtung 20 besitzt ein elektromagnetisches Ventil 20.1, das über die Steuerleitung 28 beaufschlagbar ist. Auf ein Signal der Steuereinrichtung 24 hin öffnet bzw. schließt dieses Ventil 20.1 die pneumatische Leitung 28, so daß die Sperreinrichtung 20 den Durchfluß von Pumpbeton freigibt bzw. sperrt. Gleichzeitig oder mit einer vorgebbaren zeitlichen Verzögerung oder Vorlauf schaltet die Steuereinrichtung 24 bei Betätigung über ein Signal, das über die Leitung 27 abgegeben wird, die Pumpeinrichtung 12 ein bzw. aus.

Im vorliegenden Fall wird die Sperreinrichtung 20 pneumatisch betätigt. Hierbei kann sie so ausgebildet sein, daß innerhalb des Gehäuses der Sperreinrichtung ein flexibler elastischer Schlauch angeordnet ist, in dem der Pumpbeton geführt wird. Wird nun die Steuereinrichtung 24 betätigt, öffnet das Ventil 20.1 die Pneumatikleitung 28 und der Raum zwischen der Innenkontur des Gehäuses der Sperreinrichtung 20 und der Außenwandung des Schlauchs wird mit Druckluft beaufschlagt, so daß dieser Schlauch zusammengeguetscht wird und der Durchfluß von Pumpbeton unterbrochen wird. Gleichzeitig veranlaßt die Steuereinrichtung 24, daß die Pumpeinrichtung 12 abgeschaltet wird.

Im vorliegenden Ausführungsbeispiel ist die Steuereinrichtung 24 am Fahrzeug 40 vorhanden und ist auch von dort zu betätigen.

In einer nicht dargestellten Ausführungsvariante ist die Steuereinrichtung als Fernsteuereinrichtung ausgebildet.

In einer weiteren Ausführungsvariante kann die Betätigungseinheit für die Steuereinrichtung am Ende des flexiblen Rohres 22 angeordnet sein. In diesem Fall bestimmt die vorort arbeitende Person, wann der Befüllvorgang begonnen bzw. beendet wird.

Dadurch, daß die Sperreinrichtung im vorderen Endbereich der Druckrohrauslegereinrichtung angeordnet ist, drückt im Falle der Beendigung des Befüllungsvorgangs kein Pumpbeton nach, so daß eine Überfüllung der zu betonierenden Bauteile, insbesondere der Füllsteine, zuverlässig vermieden werden kann.

Erfindungsgemäß ist es ebenfalls möglich, die Sperreinrichtung direkt am freien Endbereich der Druckrohrauslegereinrichtung anzuordnen.

## Patentansprüche

1. Betonpumpvorrichtung (10) mit
- einer Pumpeinrichtung (12) und
- einer mobilen Druckrohreinrichtung (14), insbesondere aus hintereinander angeordneten Druckrohreinheiten (16), durch die der Beton mittels der Pumpeinrichtung (12) gedrückt wird,
**dadurch gekennzeichnet,** daß
- im Bereich der Druckrohrauslegereinrichtung (14) eine Absperreinrichtung (20) angeordnet ist, die in Abhängigkeit der Signale einer Steuereinrichtung (24) den Durchfluß von Pumpbeton sperrt oder öffnet.

2. Vorrichtung nach Anspruch 1,
**dadurch gekennzeichnet,** daß
die Druckrohrauslegereinrichtung (14) im Austrittsbereich des Pumpbetons eine flexible Rohreinheit (22) besitzt und die Absperreinrichtung (20) in Pumprichtung (P) gesehen unmittelbar vor der flexiblen Rohreinheit (22) angeordnet ist.

3. Vorrichtung nach Anspruch 1 und/oder 2,
**dadurch gekennzeichnet,** daß
in Pumprichtung (P) gesehen unmittelbar vor und/oder hinter der Absperreinrichtung (20) eine rohrbogenförmige Betonbremseinheit (18, 19) angeordnet ist.

4. Vorrichtung nach einem oder mehreren der vorstehenden Ansprüche,
**dadurch gekennzeichnet,** daß
die Sperreinrichtung (20) über eine von einem Kompressor (30) beaufschlagte pneumatische Leitung (28) pneumatisch betätigbar ist.

5. Vorrichtung nach einem oder mehreren der vorstehenden Ansprüche,
**dadurch gekennzeichnet,** daß
eine elektromagnetische Ventileinheit vorhanden ist, die von der Steuereinrichtung ansteuerbar ist und die pneumatische Betätigung der Absperreinrichtung veranlaßt.

6. Vorrichtung nach einem oder mehreren der vorstehenden Ansprüche,
**dadurch gekennzeichnet,** daß
die Steuereinrichtung (24) auch die Pumpeinrichtung (12) ansteuert und im Falle des Schließens der Absperreinrichtung (20) die Pumpeinrichtung (12) deaktiviert.

7. Vorrichtung nach einem oder mehreren der vorstehenden Ansprüche,
**dadurch gekennzeichnet,** daß
die Steuereinrichtung als Fernsteuereinrichtung ausgebildet ist.

8. Vorrichtung nach einem oder mehreren der vorstehenden Ansprüche,
**dadurch gekennzeichnet,** daß
die Sperreinrichtung (20) über Flansche an die Druckrohrauslegereinrichtung angeschlossen ist.

9. Vorrichtung nach einem oder mehreren der vorstehenden Ansprüche,
**dadurch gekennzeichnet,** daß
in Pumprichtung (P) gesehen vor der Sperreinrichtung (20) eine Reduzierrohreinheit (17) angeordnet ist.

10. Vorrichtung nach einem oder mehreren der vorstehenden Ansprüche,
**dadurch gekennzeichnet,** daß
die Steuereinrichtung ein Betätigungsorgan zum Betätigen der Sperreinrichtung besitzt, das im Endbereich der Druckrohrauslegereinrichtung bzw. der flexiblen Rohreinheit angeordnet ist.
